# FASCICULE DE BREVET EUROPEEN

(11) **EP 0 571 515 B1**
(45) Date de publication et mention de la délivrance du brevet: **29.11.1995**
(21) Numéro de dépôt: 92906563.9
(22) Date de dépôt: 13.02.1992
(51) Int. Cl.: C07F 9/50, C07F 9/46

(54) **PHOSPHINITE-BORANES CHIRAUX, LEUR PREPARATION ET UTILISATION**
Chirale Phosphinigsäure-Borane-Derivate, ihre Herstellung und Verwendung
CHIRAL PHOSPHINITE-BORANES, THEIR PREPARATION AND USE

(30) Priorité: 13.02.1991 FR 9101674
(43) Date de publication de la demande: 01.12.1993
(73) Titulaire: ELF AQUITAINE, 92400 Courbevoie (FR)
(72) Inventeur: JUGE, Sylvain, F-91400 Orsay (FR); GENET, Jean-Pierre, F-92260 Fontenay-aux-Roses (FR); LAFFITTE, Jean-Alex, F-64000 Pau (FR); STEPHAN, Massoud, F-75012 Paris (FR)
(74) Mandataire: Clisci, Serge
(86) Numéro de dépôt international: FR9200143
(87) Numéro de publication internationale: WO9214739

(56) Documents cités:
- WO-A-91/00286
- TETRAHEDRON LETTERS. vol. 31, no. 44, 1990, OXFORD GB pages 6357 - 6360; S. JUGE ET AL.: '"Efficient asymmetric synthesis of optically pure tertiary mono and diphosphine ligands"' cité dans la demande

## Description

### DOMAINE DE L'INVENTION

La présente invention concerne une nouvelle classe de composés phosphinite, notamment des composés phosphinite chiraux. Elle vise plus précisément les composés phosphinite-borane de formule Iₒ ci-après, dans lesquels les deux atomes de phosphore sont tous deux complexés par (ou liés à) un groupe borane. Ces composés phosphinite-borane sont porteurs d'un ou de plusieurs groupes labiles ou substituables, permettant une substitution nucléophile, par exemple, par un groupe alkylant, cycloalkylant ou arylant.

Elle comprend également les procédés de préparation de ces composés phosphinite-borane, ainsi que leurs utilisations dans la préparation de diphosphines.

### ART ANTERIEUR

On sait que les composés phosphinite, et particulièrement parmi ceux-ci ceux qui sont optiquement actifs, présentent une utilité industrielle tant par eux mêmes qu'en tant que matière première pour la préparation d'autres produits chiraux utiles, tels que notamment les oxydes de phosphines, phosphines, etc.

De nombreux produits naturels et synthétiques peuvent être préparés à présent, par synthèse asymétrique, catalysée au moyen de métaux de transition, et notamment avec des catalyseurs comprenant des ligands organophosphorés optiquement actifs. La voie de synthèse asymétrique permet d'obtenir des substances qui présentent un intérêt dans le domaine de l'agriculture, de l'alimentation, de la pharmacie ou de la parfumerie. La production de L-Dopa, de L-phénylalanine, de menthol ou de citronellol constitue des exemples connus illustrant ladite voie de synthèse asymétrique.

La préparation de deux composés de formule 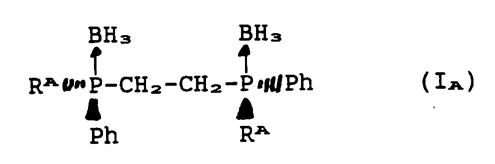
dans laquelle R^{A} est ortho-anisyle ou 2-naphthyle, est connu d'un article des co-inventeurs de la présente invention, à savoir S.JUGE et al., Tetrahedron Letters 31, (No 44), pages 6357-6360 (1990). Les deux composés de formule I_{A}, suivant le schéma 2 dudit article (voir page 6358), sont obtenus à partir de 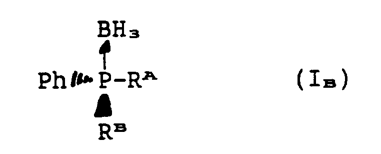
(où R^{A} est défini comme indiqué ci-dessus, et R^{B} est CH₃) par réaction de deux moles de I_{B} avec (i) s-BuLi, puis (ii) CuCl₂.

Ledit article, qui est incorporé ici à titre de référence, décrit également
(a) l'obtention des composés de départ de formule I_{B}, et
(b) l'obtention de complexes chiraux 1,2-diphosphinoéthane de formule 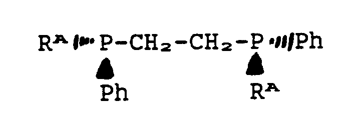
On connaît par ailleurs des exemples 21 et 22 de la demande internationale PCT publiée WO 91/00286 (date de la publication : 10 janvier 1991) deux produits de formule Iₒ, à savoir le composé où R¹ = Ph, R² = Me, R³ = Me et Z = CH₂, et respectivement le composé où R¹ = Ph, R² =Me, R³ = MeO et Z = CH₂CH₂.

### BUT DE L'INVENTION

Un but de l'invention est de fournir de nouveaux composés phosphinite-borane qui sont structurellement différents de ceux de l'art antérieur précité.

Un autre but de l'invention est de fournir une méthode générale pour la préparation des nouveaux composés de formule Iₒ ci-après, et des méthodes particulières pour l'obtention de ces composés.

### OBJET DE L'INVENTION

Selon un premier aspect de l'invention, on préconise un nouveau composé phosphinite à substitution BH₃ sur le phosphore, caractérisé en ce qu'il est choisi parmi l'ensemble constitué par les produits phosphinite-borane répondant à la formule générale : 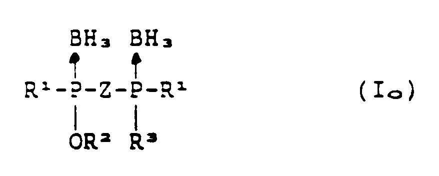
dans laquelle
R¹ et R², identiques ou différents, représentent chacun un groupe alkyle en C₁-C₁₈, un groupe cycloalkyle en C₅-C₁₈, un groupe aralkyle en C₇-C₁₈ ou un groupe aryle en C₆-C₁₄, chacun de ces groupes pouvant être substitué par un ou plusieurs groupes choisis parmi les alkoxy en C₁-C₄, CN, CF₃, F, Cl, Br et I,
R³ représente un groupe alkyle en C₁-C₁₈, cycloalkyle en C₅-C₁₈, aralkyle en C₇-C₁₈, aryle en C₆-C₁₄, alcoxy en C₁-C₁₈, cycloalkyloxy en C₇-C₁₈, aralkyloxy en C₇-C₁₈ ou aryloxy en C₆-C₁₄,
Z représente un pont reliant les deux atomes de phosphore, ledit pont étant (i) une chaîne hydrocarbonée ayant de 1 à 12 atomes C caténaires, ou (ii) une chaîne hétérohydrocarbonée contenant de 1 à 12 atomes C caténaires et au moins un hétéroatome caténaire choisi parmi O, S, Si, P et N,
avec la condition supplémentaire que (i) Z est différent de CH₂ quand on a simultanément R¹ = phényle et R² = R³ = méthyle, et (ii) Z est différent de CH₂CH₂ quand on a simultanément R¹ = phényle, R² = méthyle et R³ = méthoxy.

D'un point de vue chiral, un composé de formule Iₒ peut être représenté par la structure suivante 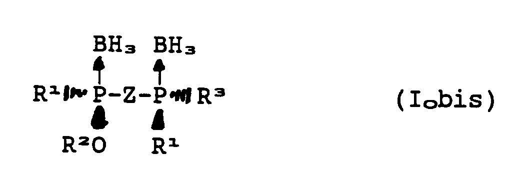
où R¹, R², R³ et Z sont définis comme indiqué ci-dessus.

Selon un second aspect de l'invention on fournit un procédé général pour la préparation d'un compose phosphinite-borane de formule Iₒ ou Iₒ bis, ledit procédé étant caractérisé en ce qu'il comprend la réaction d'un composé organométallique provenant d'un phosphinite-borane avec un composé phosphinite-borane non organométallique. De préférence ledit composé organométallique est un organolithien.

Selon un troisième aspect de l'invention on préconise l'utilisation desdits composés phosphinite-borane de formule Iₒ ou Iₒ bis pour l'obtention d'autres composés chiraux, notamment les produits diphosphine-diborane de formule X et les produits diphosphine de formule IX : 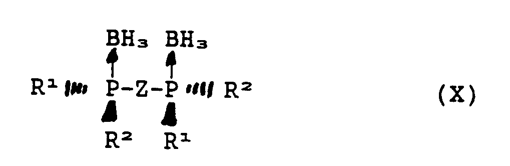
ou 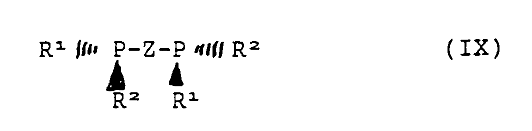
où R¹, R² et Z sont définis comme indiqué ci-dessus.

Plus précisément les composés phosphinite-borane selon l'invention sont, notamment, transformés en composés diphosphine-diborane qui sont de haute pureté diastéréoisomérique ou essentiellement diastéréoisomériquement purs. Puis ces composés diphosphine-diborane sont aisément décomplexés (par décomplexion on entend ici l'enlèvement des deux groupes borane BH₃) à 50° C au moyen d'une amine secondaire telle que la diéthylamine.

### ABREVIATIONS

Par commodité, les abréviations suivantes ont été utilisées dans la présente description.
- bNp: = bétanaphtyle (i.e. 2-naphtyle)
- BNPE: = bis(naphthyl phényl phosphino)éthane, en particulier le diastéréoisomère (-)-BNPE de formule: 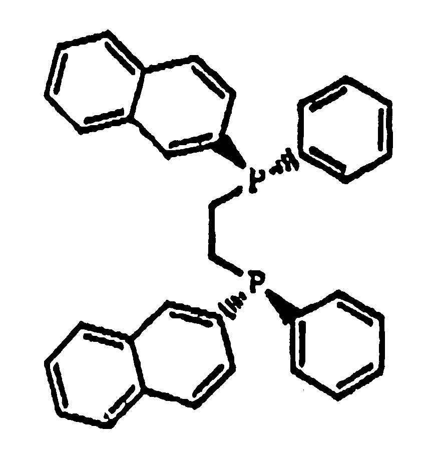
- BNPPMDS: = bis(2-naphthyl phényl phosphino-méthano) diphénylsilane, en particulier le diastéréoisomère de formule : 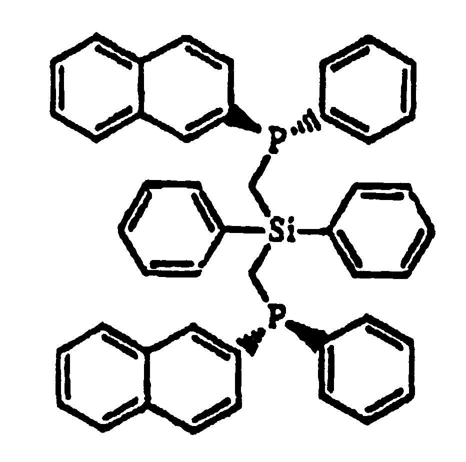
- Bu: = n-butyle
- Bz: = benzyle
- DIPAMP: = 1,2-bis(phényl o-anisyl phosphino)éthane , en particulier le diastéréoisomère (-)-DIPAMP de formule : 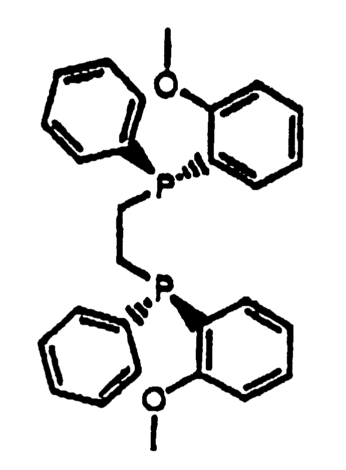 qui est également dénommé (R,R)-1,2-bis(phényl ortho-anisylphosphino)éthane
- Et: = éthyle
- i-Pr: = isopropyle
- Me: = méthyle
- MeO: = méthoxy
- MP: = point de fusion
- NMR: = résonance magnétique nucléaire
- oAn: = orthoanisyle
- Ph: = phényle
- Pr: = n-propyle
- s-Bu: = sec.-butyle
- t-Bu: = tert.-butyle
- THF: = tétrahydrofuranne

### DESCRIPTION DETAILLEE DE L'INVENTION

Parmi les groupes fonctionnels qui sont inclus dans les définitions de R¹ et R² et qui conviennent selon l'invention, on peut mentionner les groupes alkoxy C₁-C₄, CN, CF₃, F, Cl, Br et I. Ainsi R¹ et R² peuvent contenir un ou plusieurs groupes substituants choisis parmi les alkoxy en C₁-C₄, CN, CF₃, F, Cl, Br, I et leurs mélanges. De préférence des groupes "fonctionnels" seront substitués sur le fragment aryle des groupes aryle et aralkyle de R¹ et R².

La chaîne hydrocarbonée du pont Z est soit une chaîne hydrocarbonée insaturée, soit une chaîne hydrocarbonée saturée.

De préférence, ledit pont Z aura l'une des structures suivantes
(a) -(CH₂)ₙ-, et
(b) -(CH₂)ₘ-A-(CH₂)ₚ-
   dans lesquelles
   n, m et p, identiques ou différents, représentent chacun un nombre entier de 1 à 6,
   A représente O, S, PR, SiR₂ ou NR, où R est alkyle en C₁-C₄, cycloalkyle en C₅-c₆, aryle en C₆-C₁₀, benzyle ou phénéthyle.

De façon plus avantageuse, ledit pont Z sera choisi parmi l'ensemble constitué par
(a1) -CH₂-,
(a2) -CH₂CH₂-,
(b1) -CH₂-O-CH₂-,
(b2) -CH₂-S-CH₂-,
(b3) -CH₂-P(Ph)-CH₂-,
(b4) -CH₂-Si(Me)₂-CH₂-,
(b5) -CH₂-Si(Ph)₂-CH₂-,
(b6) -CH₂-Si(Bz)₂-CH₂-,
(b7) -CH₂-Si(Et)₂-CH₂- ou
(b8) -CH₂CH₂-P(Ph)-CH₂CH₂-.

Parmi ces derniers ponts Z, les plus intéressants selon l'invention sont ceux qui comportent un groupe silyle à savoir les ponts selon les structures (b4) à (b7).

Quand R³ est un groupe alkoxy il comprend de préférence 1 à 6 atomes de carbone.

La méthode générale pour préparer un composé phosphinite-borane de formule Iₒ comprend la réaction d'un matériau phosphinite à substitution BH₃ (i.e. un composé organométallique contenant du phosphore et provenant d'un produit phosphinite) de formule 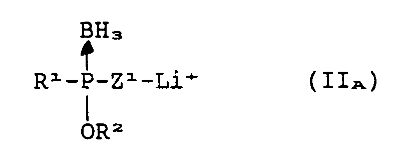
où R¹ et R² sont définis comme indiqué ci-dessus, et Z¹ est Z ou un premier fragment dudit pont Z, avec un composé phosphinite à substitution BH₃ de formule 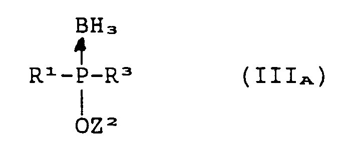
où R¹ et R³ sont définis comme indiqué ci-dessus, et Z² est R² ou le second fragment restant du pont Z, Z¹ et Z² étant tels que Z¹-Z² = Z.

D'un point de vue chiral, la réaction de II_{A} avec III_{A} peut être illustrée par le mécanisme réactionnel suivant : 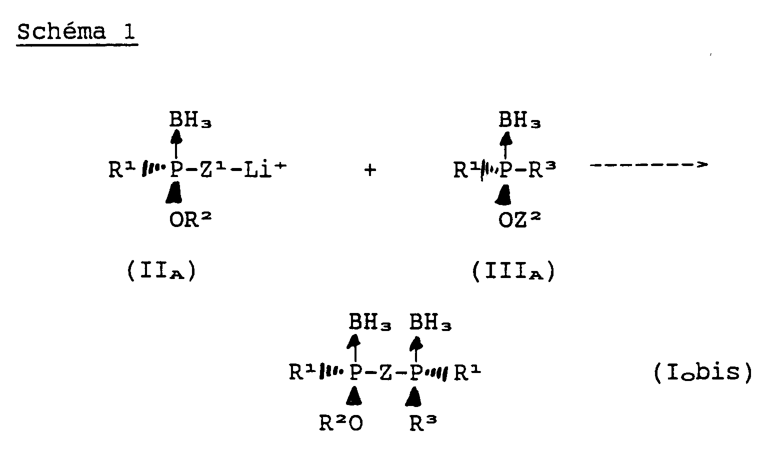
Pour être plus précis, le contre-ion de Li⁺, à savoir X⁻, est un anion halogénure tel que F⁻, Cl⁻, Br⁻, l'anion halogénure préféré étant Cl⁻.

Selon un premier mode de réalisation la structure (a1) précitée, i.e. Z = CH₂, est obtenue par réaction d'une mole de II_{A} (où Z est CH₂) avec au moins une mole de III_{A} (où OZ² est OMe).

Ce premier mode de réalisation est illustré par le mécanisme réactionnel suivant, dans lequel Z¹ est CH₂, R¹ est Ph, R² est Me et R³ est Me : 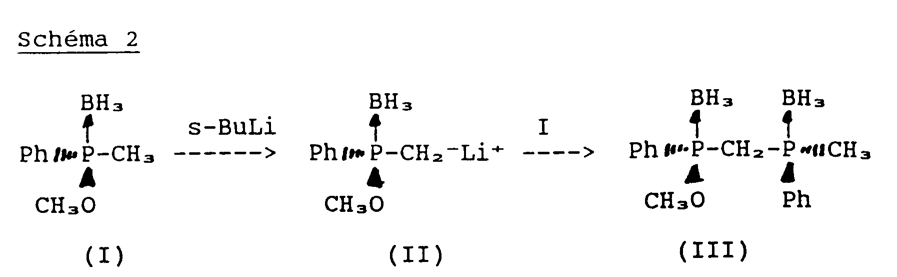
Selon un second mode de réalisation la structure (a2) précitée, i.e. Z = CH₂CH₂, est obtenue par réaction d'une mole d'un composé II_{A} (où Z¹ est CH₂) avec une mole du même composé II_{A} (où Z¹ est également CH₂) en présence d'un agent oxydant doux, de préférence CuX₂ (où X est un atome d'halogène tel que défini ci-dessus, et avantageusement Cl).

Ce second mode de réalisation est illustré par le mécanisme réactionnel suivant, dans lequel R¹ est Ph, R² est Me, R³ est Me, Z¹ est CH₂ et Z est CH₂CH₂ : 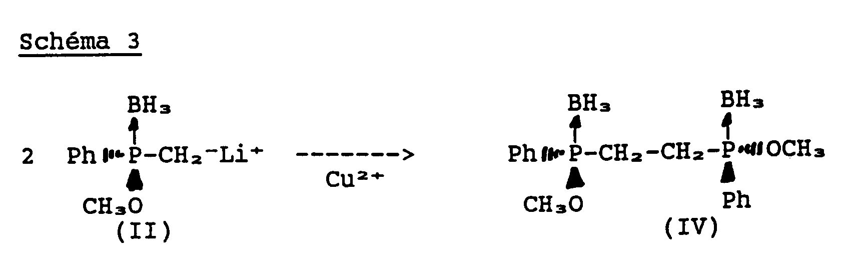
Selon un troisième mode de réalisation les structures (b1-b7) précitées peuvent être obtenues par réaction de deux moles de II_{A} (où Z¹ est CH₂) avec une mole d'un composé dihalogéné de formule

R₂AX₂

dans laquelle R, A et X sont définis comme indiqué ci-dessus.

Ce troisième mode de réalisation est illustré par le mécanisme réactionnel suivant, dans lequel R¹ est Ph, R² est Me, R³ est Me, Z¹ est CH₂ et Z est CH₂-SiR₂-CH₂ dans le produit final : 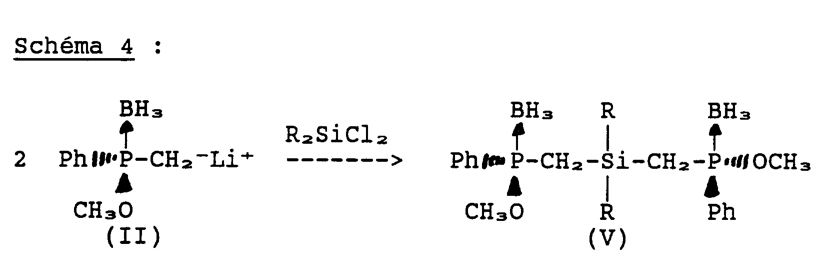
Dans les premier, second et troisième modes de réalisation, la réaction est effectuée à une température de - 100°C à + 30°C. Dans le premier mode de réalisation, un gradient de température de - 40°C à + 15°C peut être utilisé. Dans le second mode de réalisation, un gradient de température de - 40°C à + 20°C peut être utilisé. Dans le troisième mode de réalisation, un gradient de température de - 40°C à 0°C peut être utilisé.

Le solvant de réaction préféré pour la mise en oeuvre des premier, second et troisième modes de réalisation est le THF anhydre.

La température préférée pour entreprendre les premier, second et troisième modes de réalisation est 0°C.

De plus, d'un point de vue chiral, il est possible de remplacer dans la formule Iₒ ou Iₒ bis un groupe oxy OR² ou R³ ou les deux par un groupe permettant une substitution nucléophile, c'est-à-dire un groupe qui est plus nucléophile que lesdits groupes oxy OR² et R³. Voir pour un remplacement de ce type, les méthodes données notamment dans les exemples 4 et 5 ci-après.

### MEILLEUR MODE

Selon le meilleur mode de mise en oeuvre de l'invention, on préconise des composés chiraux de formule Iₒ (c'est-à-dire de formule Iₒ bis pour être plus précis), dans lesquels R¹ est Ph, Ph substitué par un à trois groupes alkoxy où chaque groupe alkoxy contient de 1 à 4 atomes de carbone, ou 2-naphtyle, R² est un groupe alkyle en C₁-C₆, R³ est un groupe alkoxy en C₁-C₆, et Z est

-CH₂-Si(Me)₂-CH₂-,

-CH₂-Si(Ph)₂-CH₂-,

-CH₂-Si(Bz)₂-CH₂-

ou

-CH₂-Si(Et)₂-CH₂- .

Ces composés sont obtenus selon le mécanisme réactionnel du schéma 4 précité.

En outre ces composés peuvent être transformés en d'autres produits chiraux, à savoir notamment
(i) des composés phosphinite-borane de formule Iₒ bis,
(ii) des composés diphosphine-diborane de formule X, et
(iii) des composés diphosphine de formule IX, à partir desdits composés de formule X.

Les transformations (i) et surtout (ii) visées ci-dessus sont avantageusement mises en oeuvre selon un mécanisme de substitution nucléophile, en remplaçant en particulier les groupes oxy OR² et R³ par des groupes aryle, des groupes aryle alkoxy-substitués et des groupes alkyle.

Selon un autre mode de réalisation de l'invention on peut directement synthétiser les composés diphosphine-diborane selon le schéma 5 qui suit relatif aux produits présentant un pont Z à chaîne hétérohydrocarbonée de structure CH₂-A-CH₂, (où A est défini comme indiqué ci-dessus et représente avantageusement SiR₂).

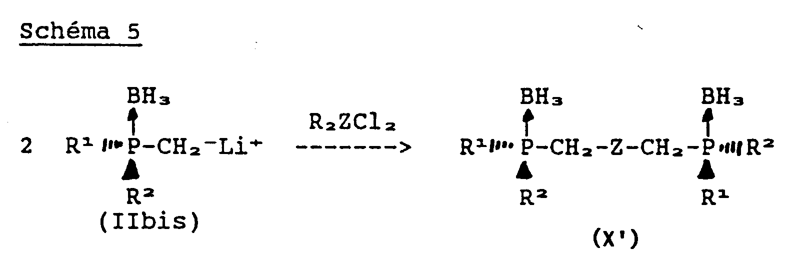

Les composés de formule X, qui sont préférés selon l'invention, sont ceux dans lesquels Z est un pont

-CH₂-Si(Me)₂-CH₂-,

-CH₂-Si(Ph)₂-CH₂-,

-CH₂-Si(Bz)₂-CH₂-

ou

-CH₂-Si(Et)₂-CH₂- .

D'autres avantages et caractéristiques de l'invention seront mieux compris à la lecture qui va suivre de la description d'exemples de préparation. Les éléments techniques fournis dans lesdits exemples de préparation ne sont nullement limitatifs mais sont présentés à titre d'illustration.
Exemple 1 : (1R,3R)-(-)-[méthyl phénylphosphino]-méthyl phényl phosphinite-diborane de méthyle. 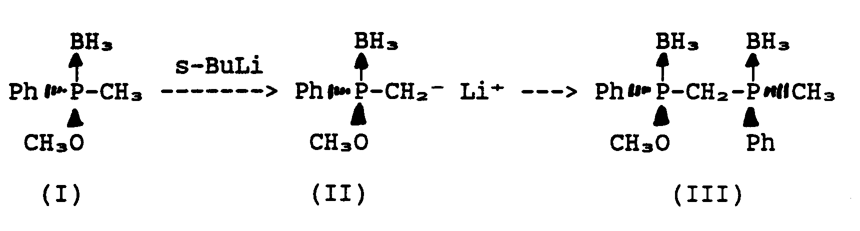 Dans un ballon de 50 ml, 2 mmoles de phosphinite-borane I sont dissoutes dans 3 ml de THF anhydre à -78°C et sous atmosphère inerte. A cette solution sous agitation, on ajoute 2 mmoles de sec-butyllithium. 0,25 h après cette addition, la température du milieu réactionnel est ramenée lentement à -40°C et on maintient la température à -40°C pendant 0,5 h pour que les anions II se fassent. Au bout de ce temps, 2 mmoles de phosphinite borane I sont à nouveau ajoutées et la température est élevée lentement jusqu'à +15°C puis on laisse le milieu réactionnel à cette température pendant 2 h. Après hydrolyse, évaporation du solvant et lavage à l'eau, le produit attendu est extrait par CH₂Cl₂, et purifié par filtration sur silice, avec le toluène comme éluant. Rendement 70 % . Les caractéristiques du produit obtenu sont les suivantes.
Huile incolore
[α]= -56° (c = 1; CHCl₃)
RMN¹H (CDCl₃) :
majoritaires : δ = 0,1-1,5 (6H,q.l.,¹*J*_{BH}= 80); 1,83 (3H, d, *J* = 10,2); 2,60 (2H, m); 3,61 (3H, d., *J* = 12,5); 7,25-7,5 (6H,m); 7,5-7,8(4H,m) . minoritaires : δ = 1,56 (3H,d.,*J* = 10,38); 3,35 (3H, d.,*J* = 11,8)
RMN¹³C (CDCl₃) : δ = 11,39 (d.,*J* = 39); 30,19 (d.d, *J* = 23,*J* = 32); 54,01 (s); 128,47-132,36 (aromatiques).
(minoritaire : δ = 12,89 (d.,*J* = 39)).
RMN³¹P (CDCl₃) : δ = + 8,38 (q,¹*J*_{PB} = 67,5). + 113,10 (q,¹*J*_{PB} = 69,8).
IR (pur) ν = 3057; 2945 (C-H); 2385; 2254 (B-H); 1437; 1417; 1173; 1115; 1064; 1034

| Microanalyse pour : C₁₅H₂₄O₁₁B₂P₂ | | |
|---|---|---|
| | Calculé | Trouvé |
| Masse : | 304,1332 | 304,1334 |
| %C | 59,21 | 58,01 |
| %H | 7,89 | 7,72 |

Exemple 2 : (S,S)-1,2-bis[méthoxy phénylphosphino]éthane-borane 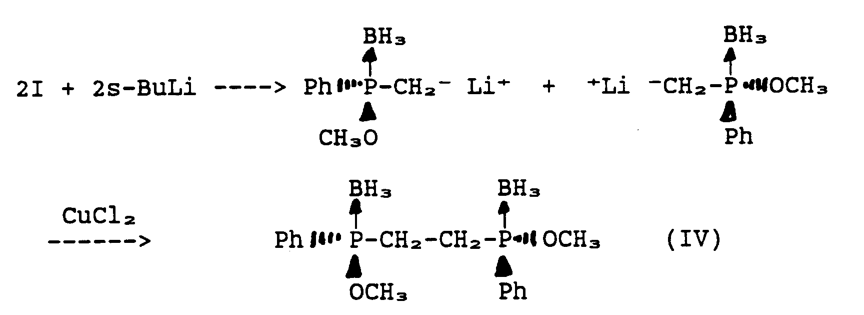 Dans un ballon de 50 ml, 2 mmoles de phosphinite-borane I sont dissoutes dans 3 ml de THF anhydre à -78°C et sous atmosphère inerte. A cette solution sous agitation, sont ajoutées 2 mmoles de sec-butyllithium. 0,25 h après cette addition, la température du milieu réactionnel est ramenée lentement à -40°C et on maintient la température à -40°C pendant 0,5 h pour que les anions II se fassent. Au bout de ce temps, 10 mmoles de CuCl₂ sont ajoutées et le mélange est abandonné à l'air pendant 12 h. Après hydrolyse, évaporation du solvant et lavage à l'eau, le produit est extrait avec du CH₂Cl₂, et purifié par filtration sur silice, avec le toluène comme éluant. Rendement 88 %
MP = 111-115°C
RMN ³¹P = + 118 (J_{PB} = 58 Hz)
[α]_{D} = -115,1° ( c = 1; CHCl₃)
RMN¹H = 0-1,5 (6H,m); 1,9-2,4 (4H, m); 3,6 (6H,d) 7,4-7,8 (10, m)
IR : ν _{BH} = 2370 cm⁻¹.
Exemple 3 :
(R,R)-bis[(méthoxy phényl phosphino)méthyl]-diphénylsilyl-borane 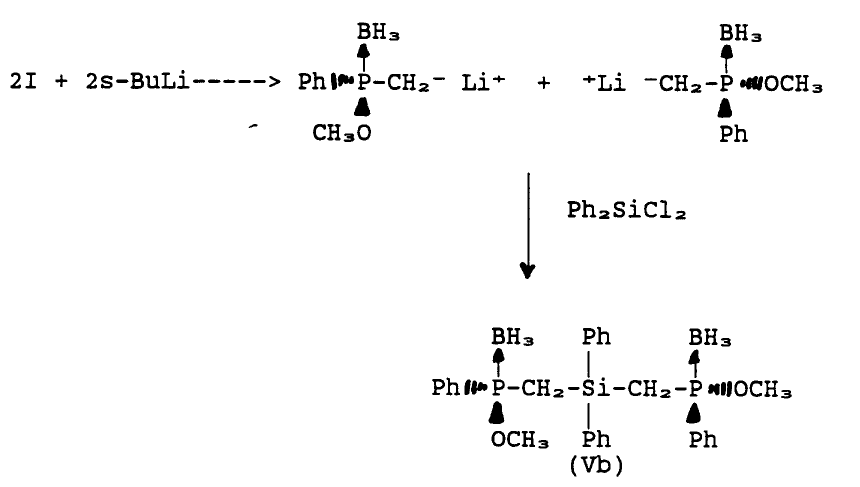 Dans un ballon de 50 ml, 2 mmoles de phosphinite-borane I sont dissoutes dans 3 ml de THF anhydre à -78°C et sous atmosphère inerte. A cette solution sous agitation, on ajoute 2 mmoles de s-butyllithium. Après 0,25 h, la température est ramenée lentement à -40°C et laissée pendant 0,5 h à -40°C pour que les anions II se fassent. Au bout de ce temps, 1 mmole de dichlorodiphényl-silane est ajoutée et la température est élevée lentement jusqu'à 0°C, puis maintenue pendant 2 h à 0°C. Après hydrolyse, évaporation du solvant et lavage à l'eau le produit est extrait par CH₂Cl₂, et purifié par filtration sur silice, avec le toluène comme éluant; Rendement : 90 % .
Huile incolore épaisse
RMN¹H (CDCl₃) : δ = 0,0-1,5 (6H,q.l.,¹*J*_{BH} = 95); 2,13-2,43 (4H,q.d.,*J* = 7,7, *J* = 16,4); 3,28 (6H,d,*J* = 12,28); 7,05-7,85 (20H,m).
(l'autre diastéréoisomère : 3,25 (6H,d, *J* = 12,27))
RMN³¹P (CDCl₃) : δ = + 116,74 (m)
l'autre isomère δ = + 114 (m)
Exemple 4 : Application du diphosphinite-borane IV de l'exemple 2 pour la préparation de DIPAMP-borane VI : 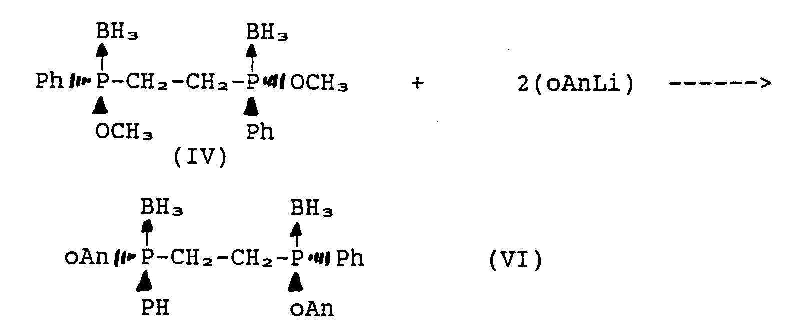 Dans un ballon de 50 ml, 2 mmoles de phosphinite-borane IV sont dissoutes dans 5 ml de THF anhydre à -78°C et sous atmosphère inerte. A cette solution sous agitation, on ajoute 2,1 mmoles d'o-anisyl-lithium (oAnLi). 0,25 h après cette addition, la température du milieu réactionnel est ramenée lentement à 0°C en 2 h. Après hydrolyse, évaporation du solvant, lavage à l'eau et extraction par CH₂Cl₂, le produit obtenu est purifié par filtration sur silice, avec le toluène comme éluant. Rendement : 80 % .
MP = 163°C (conforme à ce qu'indique la littérature).
Exemple 5 : Application du diphosphinite-borane IV de l'exemple 2 pour la préparation de diphosphine-borane VIII : 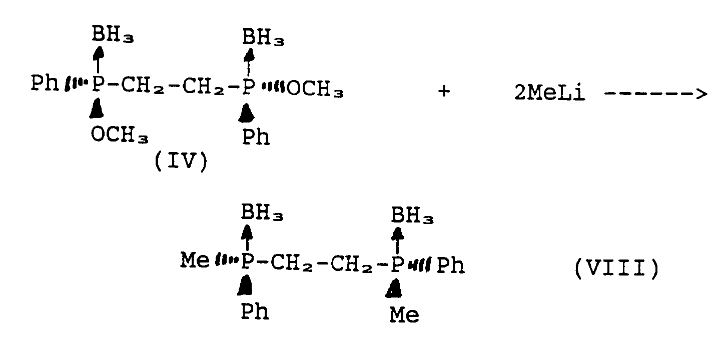 Dans un ballon de 50 ml, 2 mmoles de diphosphinite-borane IV sont dissoutes dans 5 ml de THF anhydre à -78°C et sous atmosphère inerte. A cette solution sous agitation, on ajoute 2,1 mmoles de méthyllithium. 0,25 h après cette addition, la température du milieu réactionnel est ramenée lentement à 0°C en 2 h, et on hydrolyse. Après évaporation du solvant, lavage à l'eau et extraction par CH₂Cl₂, le produit obtenu est purifié par filtration sur silice, avec le toluène comme éluant; Rendement 90 % .
MP= 166-168°C.IR : 2378, 1457, 1420, 1065 cm⁻¹
RMN¹H : 0-2 ppm (6H,m); 1,55 (6H,m); 1,8-2,2 (4H,m); 7,2-7,9 (10H,m)

| analyse pour: C₁₆H₂₆B₂P₂ | | |
|---|---|---|
| calculé | C = 63,58 % | H = 8,61 % |
| trouvé | C = 63,68 % | H = 8,55 % |

Exemple 6 : Applications des diphosphine-boranes préparés aux exemples 4 et 5 pour la préparation de diphosphines :
Selon la technique décrite dans l'art antérieur par T. Imamoto (c'est cette technique qui est utilisée dans le schéma 3, page 6358, de l'article précité de S. JUGE et al.), une solution 0,5 M en (-)-DIPAMP-diborane VI est chauffée à 50°C pendant 12 h. Au bout de ce temps, l'excès d'amine est évaporé et le résidu est filtré sur une courte colonne de silice, avec le toluène pour éluant. La diphosphine attendue, à savoir dans le cas d'espèce le produit (-)-DIPAMP, est récupérée dans les premières fractions. MP = 103°C (conforme à ce qu'indique la littérature).
De façon analogue, à partir du composé de formule VIII obtenu selon l'exemple 5 ci-dessus, on obtient la diphosphine attendue, à savoir le composé de formule 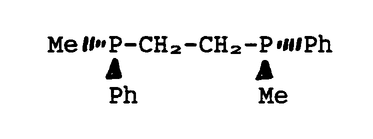
Exemple 7
(R,R)-bis[(o-anisyl phényl phosphino)méthyl]diéthylsilyl-diborane 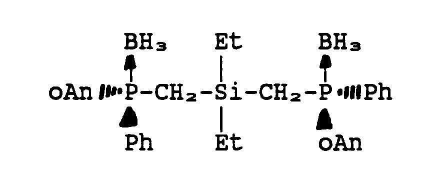 On procède selon le schéma 5 selon un mode opératoire similaire à celui décrit dans l'exemple 3 ci-dessus.
On dissout 2 mmoles de diphosphine-diborane dans 3 ml de THF anhydre à - 70°C et sous atmosphère inerte. A la solution résultant sous agitation on ajoute 2 mmoles de s-BuLi. Après avoir laissé le milieu réactionnel sous agitation pendant 0,25 h, la température est ramenée lentement à - 40°C et maintenue à - 40°C pendant 0,5 h pour que les anions se fassent. Au bout de ce temps, 1 mmole de dichloroéthylsilane est ajoutée et la température est élevée lentement jusqu'à 0°C et maintenue pendant 2h à 0°C après hydrolyse, évaporation du solvant et lavage à l'eau, le produit est extrait par CH₂Cl₂ et purifié par filtration sur silice en utilisant le toluène comme éluant. Par recristallisation de l'éthanol on obtient le produit attendu qui se présente sous la forme de cristaux blancs.
Rendement : 76 %
MP = 181°C
[α]_{D} = + 86°C
RMN¹H (CDCl₃) :
0-1,5(16H,m) ; 1,7-2,4(4H,m) ; 3,7(6H,s) ; 6,8-8(18H,m) RMN¹³C (CDCl₃) :
5,23 ; 6,7 ; 30,8 ; 55,1 ; 110,9 ; 120,7-135,9 ; 161 IR (KBr) :
698 ; 747 ; 764 ; 781 ; 805 ; 1227 ; 1464 ; 1589 ; 2375
Exemple 8
(R,R)-bis[(2,4-diméthoxyphényl phényl phosphino)méthyl]diphénylsilyl-diborane
En procèdant selon les modalités décrites à l'exemple 7 ci-dessus, on obtient le produit attendu avec un rendement de 92 % .
MP = 154°C
[α]_{D} = + 61°
RMN¹H (CDCl₃) :
0-1,5 (6H,m) ; 2,6-2,9 (4H,m) ; 3,49 (6H) ; 3,78 (6H,s) 6,1-6,3 (2H,m) ; 6,9-7,7 (24H,m)
RMN¹³C (CDCl₃) :
55,2 (*J*_{PC}=18HZ) ; 98,4 ; 105 ; 126-135 ; 160-161
Exemple 9
(R,R)-bis[(o-anisyl phényl phosphino)méthyl]diphénylsilyl-diborane 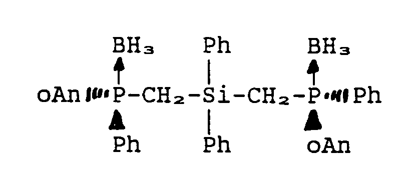 En procèdant selon les modalités décrites à l'exemple 7 ci-dessus, on obtient le produit attendu avec un rendement de 85 % après recristallisation du mélange hexane-toluène 2/1 (v/v).
MP = 200°C
RMN¹H (CDCl₃) :
0-1,8 (6H,m) ; 2,85 (4H,d) ; 3,5 (6H,s) 6,5-7,5 (28H,m) ; 8 (d)
RMN¹³C (CDCl₃):
55 ; 110 ; 115-137 (m)
IR (KBr) :
698 ; 803 ; 1021 ; 1124 ; 1249 ; 1430 ; 1625 ; 2382
Exemple 10
(S,S)-bis[(o-anisyl phényl phosphino)méthyl]diméthylsilyl-diborane
En procèdant selon les modalités décrites à l'exemple 7 ci-dessus, on obtient à partir de l'o-anisyl méthyl phényl phosphine borane [i.e. (S)-PAMP-BH₃] le produit attendu avec un rendement énantiomérique (en abrégé : e.e.) 100 % après recristallisation hexane.
MP = 139-140°C
Rf (dans le toluène) = 0,4
RMN¹H (CDCl₃) :
0,2 (6H,s) ; 0,5-1,9 (6H,q.l.,¹*J*_{BH}= 48,6) ; 1,8 (2H,t,*J* = 13,5) ; 2,39 (2H,d.d.,*J =*13,8; *J* = 18,2); 3,8 (6H,s); 6,95-8,18 (18H,m)
RMN¹³C (CDCl₃) :
11,14 (d,*J* =27); 55,23 (s); 111,05 (s); 117,76-161,36 RMN³¹P (CDCl₃) :
+ 12,4 (d.m., *J* =56)
IR (KBr) :
1017; 1074; 1105; 1130; 1249; 1276; 1431; 1478; 1589; 2365 (B-H); 2403; 2972 (C-H); 3052.

| Analyse pour C₃₀H₄₀O₂¹¹B₂P₂Si | | |
|---|---|---|
| | calculé | trouvé |
| Masse | 544,2459 | 544,2435 |
| % C | 66,17 | 66,06 |
| % H | 7,35 | 7,42 |

Exemple 11
(R,R)-bis[(2-naphtyl phényl phosphino)méthyl]diphénylsilyl-diborane
En procèdant selon les modalités décrites à l'exemple 7 ci-dessus, on obtient à partir de (S)-(méthyl 2-naphtyl phényl phosphine) borane et de dichlorodiphénylsilane le produit attendu avec un rendement e.e. de 100 % après recristallisation du mélange hexane-propanol 1/1 (v/v).
MP = 188°C
[α]_{D} = - 2° (c=1 ; CHCl₃)
RMN¹H (CDCl₃) :
0,5-2,0 (6H,q.l.) 2,65 (4H,d.t., *J* = 14,2; *J* = 76,6) ; 6,70-7,88 (32H,m); 7,97 (2H,d, *J* = 13) ; 6,70-7,88 (32H,m); 7,97 (2H,d, *J* = 13)
RMN¹³C (CDCl₃) :
10,10 (d, *J* = 24,2) ; 126,35-135,21
RMN³¹P (CDCl₃) :
-12,6 (m)
Exemple 12
(R,R)-bis[(méthoxy phényl phosphino)méthyl]diméthylsilyl-diborane
En procèdant selon les modalités décrites à l'exemple 3 ci-dessus, on obtient le produit attendu avec un rendement de 93,7 % après recristallisation du toluène. MP = 50°C
Rf = 0,7 (dans le toluène)
[α]_{D} = - 89° (c=1; CHCl₃)
RMN¹H (CDCl₃) :
0,13 (6H,s); 0,4-1,8 (6H,q.l., ¹*J*_{BH} = 100); 1,53 (4H, d.d.d., *J* = 9,5; *J* = 14,3 ; *J* = 59,5); 3,52 (6H,d, *J* = 11,9) ; 7,43-7,57 (6H,m); 7,71-7,82 (4H,m)
[l'autre diastéréoisomère : 3,48 (6H,d, *J* = 11,9)] RMN¹³C (CDCl₃) :
19,40 (d, *J* = 33,5); 53,32 (s); 128,7 (d, *J* = 9,6) ; 130,64 (d, *J* = 11); 131,97 (s); 132,75 (s) RMN³¹P (CDCl₃) :
- majoritaire : + 116,22 (q, ¹*J*_{BH} = 78)
- minoritaire : + 113,70 (q, ¹*J*_{BH} = 70)
IR (pur) :
1032; 1066; 1115; 1255 (C-O); 1437 (P-O); 2378 (B-H); 2841 (C-H); 2944 ; 3058

| Analyse pour C₁₈H₃₂O₂B₂P₂Si | | |
|---|---|---|
| | calculé | trouvé |
| Masse | 392,1832 | 392,1786 |
| % C | 55,10 | 55,60 |
| % H | 8,16 | 8,27 |

Exemple 13
(R,R)-bis[(o-anisyl phényl phosphino)méthyl]diméthylsilyl-diborane
En procèdant selon les modalités décrites à l'exemple 7 ci-dessus, on obtient le produit attendu, qui est le diastéréoisomère du produit de l'exemple 10, avec un rendement de 65 % après recristallisation de l'hexane.
Exemple 14
(R,R)-bis[(o-anisyl phényl phosphino)méthyl]diphénylsilyl-diborane et (S,S)-bis[(o-anisyl phényl phosphino)méthyl]diéthylsilyl-diborane
Ces deux produits sont obtenus à partir du diphosphinite-diborane de l'exemple 3 et de son diastéréoisomère en éliminant les groupes BH₃ présents sur les atomes de phosphore, en procèdant comme indiqué selon des modalités opératoires analogues à celles décrites à l'exemple 4 ci-dessus.
A partir du produit de l'exemple 3, le produit obtenu est purifié par filtration sur silice en utilisant le toluène comme éluant. Après recristallisation du mélange hexane-toluène 2/1 (v/v) on obtient ledit produit pur avec un rendement de 65 %.
MP = 200°C.
Exemple 15
En procédant selon le schéma 4, en remplaçant R₂SiCl₂ par RP(CH₂Cl)₂, on obtient le composé diborane triphosphoré de formule 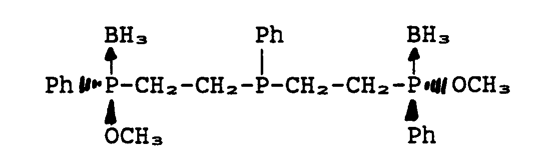 Par substitution nucléophile on remplace le groupe méthoxy par un groupe oAn, pour obtenir le composé 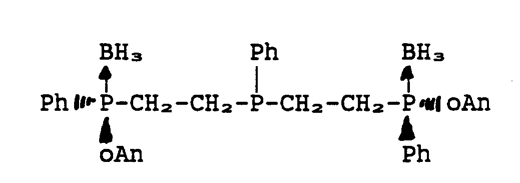 En éliminant les groupes borane selon les modalités opératoires de l'exemple 6, on obtient le composé triphosphine de formule

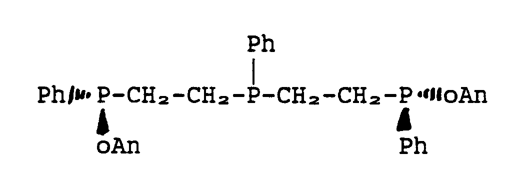

## Revendications

1. Composé phosphinite à substitution BH₃ sur le phosphore, caractérisé en ce qu'il est choisi parmi l'ensemble constitué par les produits phosphinite-borane répondant à la formule générale : 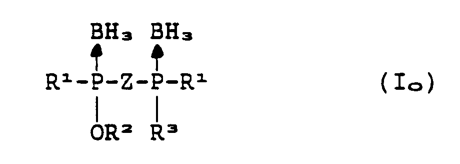 dans laquelle
R¹ et R², identiques ou différents, représentent chacun un groupe alkyle en C₁-C₁₈, un groupe cycloalkyle en C₅-C₁₈, un groupe aralkyle en C₇-C₁₈ ou un groupe aryle en C₆-C₁₄, chacun de ces groupes pouvant être substitué par un ou plusieurs groupes choisis parmi les alkoxy en C₁-C₄, CN, CF₃, F, Cl, Br et I,
R³ représente un groupe alkyle en C₁-C₁₈, cycloalkyle en C₅-C₁₈, aralkyle en C₇-C₁₈, aryle en C₆-C₁₄, alcoxy en C₁-C₁₈, cycloalkyloxy en C₇-C₁₈, aralkyloxy en C₇-C₁₈ ou aryloxy en C₆-C₁₄,
Z représente un pont reliant les deux atomes de phosphore, ledit pont étant (i) une chaîne hydrocarbonée ayant de 1 à 12 atomes C caténaires, ou (ii) une chaîne hétérohydrocarbonée contenant de 1 à 12 atomes C caténaires et au moins un hétéroatome caténaire choisi parmi O, S, Si, P et N,
avec la condition supplémentaire que (i) Z est différent de CH₂ quand on a simultanément R¹ = phényle et R² = R³ = méthyle, et (ii) Z est différent de CH₂CH₂ quand on a simultanément R¹ = phényle, R³ = méthyle et R³ = méthoxy.

2. Composé phosphinite suivant la revendication 1, caractérisé en ce qu'il présente la structure chirale 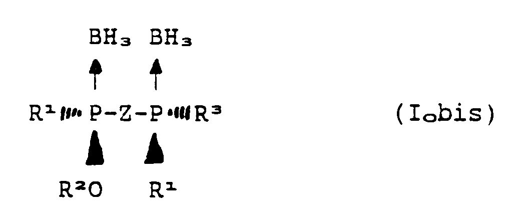 où R¹, R², R³ et Z sont définis comme indiqué ci-dessus.

3. Composé phosphinite suivant la revendication 1 ou 2, dans lequel R¹ et R² représentent chacun un groupe aryle non substitué ou un groupe aryle substitué par un ou plusieurs alkoxy en C₁-C₄, CN, CF₃, F, Cl, Br et I.

4. Composé phosphinite suivant la revendication 1 ou 2, dans lequel le pont Z a l'une des structures suivantes
(a) -(CH₂)ₙ-, et
(b) -(CH₂)ₘ-A-(CH₂)ₚ-
dans lesquelles
n, m et p, identiques ou différents, représentent chacun un nombre entier de 1 à 6,
A représente O, S, PR, SiR₂ ou NR, où R est alkyle en C₁-C₄, cycloalkyle en C₅-C₆, aryle en C₆-C₁₀, benzyle ou phénéthyle.

5. Composé phosphinite suivant la revendication 1 ou 2, dans lequel le pont Z est choisi parmi l'ensemble constitué par
(a1) -CH₂-,
(a2) -CH₂CH₂-,
(b1) -CH₂-O-CH₂-,
(b2) -CH₂-S-CH₂-,
(b3) -CH₂-P(Ph)-CH₂-,
(b4) -CH₂-Si(Me)₂-CH₂-,
(b5) -CH₂-Si(Ph)₂-CH₂-,
(b6) -CH₂-Si(Bz)₂-CH₂-,
(b7) -CH₂-Si(Et)₂-CH₂- ou
(b8) -CH₂CH₂-P(Ph)-CH₂CH₂-.

6. Composé phosphinite suivant la revendication 1 ou 2, dans lequel R³ est un groupe alkoxy en C₁-C₆.

7. Composé phosphinite chiral de formule Iₒbis suivant la revendication 2, où R¹ est Ph, Ph substitué par un à trois groupes alkoxy où chaque groupe alkoxy contient de 1 à 4 atomes de carbone, ou 2-naphtyle, R² est un groupe alkyle en C₁-C₆, R³ est un groupe alkoxy en C₁-C₆, et Z est
-CH₂-Si(Me)₂-CH₂-,
-CH₂-Si(Ph)₂-CH₂-,
-
CH₂-Si(Bz)₂-CH₂-
ou
-CH₂-Si(Et)₂-CH₂- .

8. Composé phosphinite chiral de formule Iₒbis suivant la revendication 2, caractérisé en ce qu'il est choisi parmi l'ensemble constitué par les
(R,R)-bis[(méthoxy phényl phosphino)méthyl]diphénylsilyl-diborane,
(R,R)-bis[(méthoxy phényl phosphino)méthyl]diméthylsilyl-diborane, et
(R,R)-bis[(méthoxy phényl phosphino)méthyl]diéthylsilyl-diborane.

9. Procédé de préparation d'un composé phosphinite-borane de formule Iₒ ou Iₒbis selon la revendication 1 ou 2, ledit procédé étant caractérisé en ce qu'il comprend la réaction d'un composé organométallique provenant d'un phosphinite-borane avec un composé phosphinite-borane non organométallique.

10. Utilisation d'un composé phosphinite-borane chiral de formule Iₒbis selon la revendication 2 pour la préparation d'un produit chiral diphosphine de formule 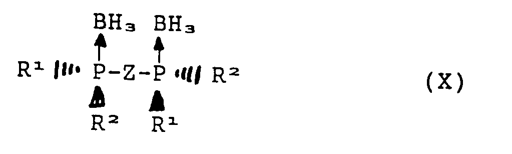 ou 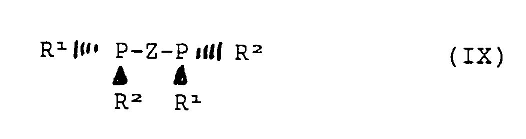 où R¹, R² et Z sont définis comme indiqué ci-dessus.

11. Composé chiral diphosphine-diborane, caractérisé en ce qu'il répond à la formule : 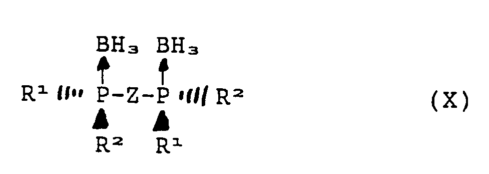 où R¹ et R² sont définis comme indiqué dans la revendication 1, et Z est CH₂-SiR₂-CH₂, où R est alkyle en C₁-C₄, cycloalkyle en C₅-C₆, aryle en C₆-C₁₀, benzyle ou phénéthyle.

12. Composé chiral diphosphine-diborane suivant la revendication 11, caractérisé en ce qu'il est choisi parmi l'ensemble constitué par les :
(R,R)-bis[(o-anisyl phényl phosphino)méthyl]diéthylsilyl-diborane,
(S,S)-bis[(o-anisyl phényl phosphino)méthyl]diéthylsilyl-diborane,
(R,R)-bis[(2,4-diméthoxyphényl phényl phosphino)méthyl]diphénylsilyl-diborane,
(R,R)-bis[(o-anisyl phényl phosphino)méthyl]diphénylsilyl-diborane,
(S,S)-bis[(o-anisyl phényl phosphino)méthyl]diméthylsilyl-diborane, et
(S,S)-bis[(2-naphtyl phényl phosphino)méthyl]diphénylsilyl-diborane.

## Claims

1. A phosphinite compound substituted by BH₃ on the phosphorus, which is selected from the group consisting of the phosphinite-borane products of the general formula : 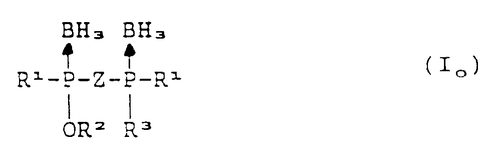 in which
R¹ and R², which are identical or different, are each a C₁-C₁₈-alkyl group, a C₅-C₁₈-cycloalkyl group, a C₇-C₁₈-aralkyl group or a C₆-C₁₄-aryl group, it being possible for each of these groups to be substituted by one or several groups selected from C₁-C₄ alkoxy, CN, CF₃, F, Cl, Br and I,
R³ is a C₁-C₁₈-alkyl, C₅-C₁₈-cycloalkyl, C₇-C₁₈-aralkyl, C₆-C₁₄-aryl, C₁-C₁₈-alkoxy, C₇-C₁₈-cycloalkoxy, C₇-C₁₈-aralkoxy or C₆-C₁₄-aryloxy group, and
Z is a bridge linking the two phosphorus atoms, said bridge being (i) a hydrocarbon chain having from 1 to 12 catenary C atoms, or (ii) a heterohydrocarbon chain containing from 1 to 12 catenary C atoms and at least one catenary heteroatom selected from O, S, Si, P and N,
with the further proviso that (i) Z is other than CH₂ when R¹ = phenyl and R² = R³ = methyl simultaneously, and (ii) Z is other than CH₂CH₂ when R¹ = phenyl, R² = methyl and R³ = methoxy simultaneously.

2. A phosphinite compound according to claim 1 which has the chiral structure : 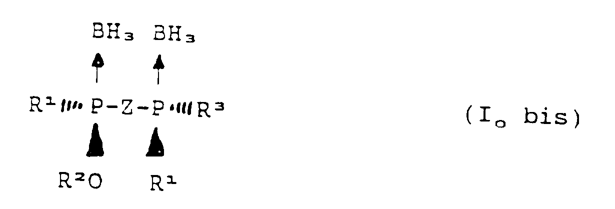 wherein R¹, R², R³ and Z are defined as indicated above.

3. A phosphinite compound according to claim 1 or 2 in which R¹ and R² are each an unsubstituted aryl group or an aryl group monosubstituted or polysubstituted by C₁-C₄-alkoxy, CN, CF₃, F, Cl, Br or I.

4. A phosphinite compound according to claim 1 or 2 in which the bridge Z has one of the following structures :
(a) -(CH₂)ₙ- and
(b) -(CH₂)ₘ-A-(CH₂)ₚ-in which
n, m and p, which are identical or different, are each an integer from 1 to 6, and
A is O, S, PR, SiR₂ or NR, in which R is C₁-C₄-alkyl, C₅-C₆-cycloalkyl, C₆-C₁₀-aryl, benzyl or phenethyl.

5. A phosphinite compound according to claim 1 or 2 in which the bridge Z is selected from the group consisting of
(a1) -CH₂-,
(a2) -CH₂CH₂-,
(b1) -CH₂-O-CH₂-,
(b2) -CH₂-S-CH₂-,
(b3) -CH₂-P(Ph)-CH₂-,
(b4) -CH₂-Si(Me)₂-CH₂-,
(b5) -CH₂-Si(Ph)₂-CH₂-,
(b6) -CH₂-Si(Bz)₂-CH₂-,
(b7) -CH₂-Si(Et)₂-CH₂- or
(b8) -CH₂-CH₂-P(Ph)-CH₂CH₂-.

6. A phosphinite compound according to claim 1 or 2 in which R³ is a C₁-C₆-alkoxy group.

7. A chiral phosphinite compound of formula Iₒ bis according to claim 2 in which R¹ is Ph, Ph substituted by one to three alkoxy groups, wherein each alkoxy group contains from 1 to 4 carbon atoms, or 2-naphthyl, R² is a C₁-C₆-alkyl group, R³ is a C₁-C₆-alkoxy group and Z is
-CH₂-Si(Me)₂-CH₂-,
-CH₂-Si(Ph)₂-CH₂-,
-CH₂-Si(Bz)₂-CH₂-
or
-CH₂-Si(Et)₂-CH₂-.

8. A chiral phosphinite compound of formula Iₒ bis according to claim 2 which is selected from the group consisting of (R,R)-bis[(methoxy phenyl phosphino)methyl]diphenylsilyldiborane, (R,R)-bis[(methoxy phenyl phosphino)methyl]dimethylsilyldiborane and (R,R)-bis[(methoxy phenyl phosphino)methyl]diethylsilyldiborane.

9. A method of preparing a phosphinite-borane compound of formula Iₒ or Iₒ bis according to claim 1 or 2, said method comprising the reaction of an organometallic compound derived from a phosphinite-borane with a non-organometallic phosphinite-borane compound.

10. A use of a chiral phosphinite-borane compound of formula Iₒ bis according to claim 2 in the preparation of a chiral diphosphine product of the formula : 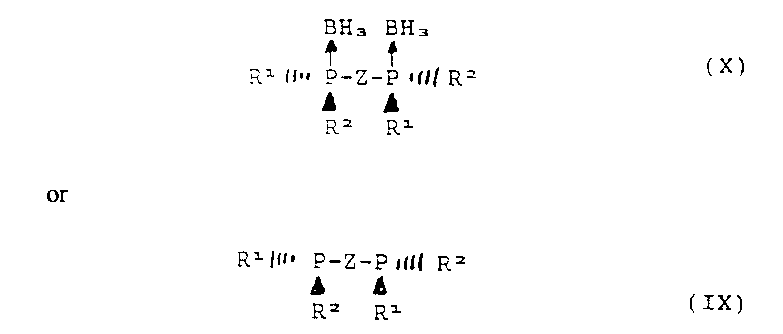 wherein R¹, R² and Z are defined as indicated above.

11. A chiral diphosphine-diborane compound of the formula 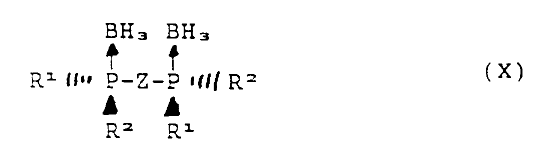 in which R¹ and R² are defined as indicated in claim 1 and Z is CH₂-SiR₂-CH₂, wherein R is C₁-C₄-alkyl, C₅-C₆-cycloalkyl, C₆-C₁₀-aryl, benzyl or phenethyl.

12. A chiral diphosphine-diborane compound according to claim 11 which is selected from the group consisting of
(R,R)-bis[(o-anisyl phenyl phosphino)methyl]diethylsilyldiborane, (S,S)-bis[(o-anisyl phenyl phosphino)methyl]diethylsilyldiborane,
(R,R)-bis[(2,4-dimethoxyphenyl phenyl phosphino)methyl]-diphenylsilyldiborane,
(R,R)-bis[(o-anisyl phenyl phosphino)methyl]diphenyl-silyldiborane,
(S,S)-bis[(o-anisyl phenyl phosphino)methyl]dimethyl-silyldiborane and
(S,S)-bis[(2-naphthyl phenyl phosphino)methyl]diphenyl-silyldiborane.

## Patentansprüche

1. Phosphinit-Verbindung mit BH₃-Substitution am Phosphor, dadurch gekennzeichnet, daß sie aus einer Gruppe ausgewählt ist, die aus den Phosphinit-Boran-Produkten besteht, die der allgemeinen Formel 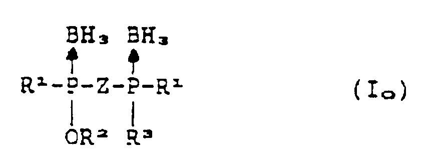 gehorchen, in der
R¹ und R², die gleich oder verschieden sind, jeweils eine C₁-C₁₈-Alkylgruppe, eine C₅-C₁₈-Cycloalkylgruppe, eine C₇-C₁₈-Aralkylgruppe oder eine C₆-C₁₄-Arylgruppe darstellen, wobei jede dieser Gruppen mit einer oder mehreren Gruppen substituiert sein können, ausgewählt aus C₁-C₄-Alkoxy, CN, CF₃, F, Cl, Br und I,
R³ eine C₁-C₁₈-Alkylgruppe, eine C₅-C₁₈-Cycloalkylgruppe, eine C₇-C₁₈-Aralkylgruppe, eine C₆-C₁₄-Arylgruppe, eine C₁-C₁₈-Alkoxygruppe, eine C₁-C₁₈-Cycloalkyloxygruppe, eine C₇-C₁₈-Aralkyloxygruppe oder eine C₆-C₁₄-Aryloxygruppe darstellt,
Z eine Brücke darstellt, die die beiden Phosphoratome miteinander verknüpft, wobei die Brücke (i) eine Kohlenwasserstoffkette ist, die 1 bis 12 Ketten-C-Atome aufweist, oder (ii) eine Hetero-Kohlenwasserstoff-Kette ist, die 1 bis 12 Ketten-C-Atome und wenigstens ein Ketten-Heteroatom, ausgewählt aus O, S, Si, P und N, aufweist,
mit der zusätzlichen Bedingung, daß (i) Z etwas anderes als CH₂ bedeutet, wenn gleichzeitig R¹ = Phenyl und R² = R³ = Methyl und (ii) Z etwas anderes als CH₂CH₂ bedeutet, wenn gleichzeitig R¹ = Phenyl, R² = Methyl und R³ = Methoxy.

2. Phosphinit-Verbindung nach Anspruch 1, dadurch gekennzeichnet, daß sie die chirale Struktur 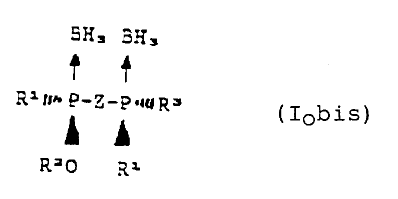 aufweist, worin R¹, R², R³ und Z die vorstehend gegebenen Definitionen besitzen.

3. Phosphinit-Verbindung nach Anspruch 1 oder 2, in der R¹ und R² jeweils eine nichtsubstituierte Arylgruppe oder eine Arylgruppe, die mit ein oder mehreren von C₁-C₄-Alkoxy, CN, CF₃, F, Cl, Br und I substituiert ist, darstellen.

4. Phosphinit-Verbindung nach Anspruch 1 oder 2, in der die Brücke Z eine der folgenden Strukturen aufweist
(a) -(CH₂)ₙ- und
(b) -(CH₂)ₘ-A-(CH₂)ₚ-, in denen
n, m und p, die gleich oder verschieden sind, jeweils eine ganze Zahl von 1 bis 6 darstellen,
A O, S, PR, SiR₂ oder NR darstellt, worin R für C₁-C₄-Alkyl, C₅-C₆-Cycloalkyl, C₆-C₁₀-Aryl, Benzyl oder Phenethyl steht.

5. Phosphinit-Verbindung nach Anspruch 1 oder 2, in der die Brücke Z ausgewählt ist aus der Gruppe, bestehend aus (a1) -CH₂-,
(a2) -CH₂CH₂-,
(b1) -CH₂-O-CH₂-,
(b2) - CH₂-S-CH₂-,
(b3) -CH₂-P(Ph)-CH₂,
(b4) -CH₂-Si(Me)₂-CH₂-,
(b5) -CH₂-Si(Ph)₂-CH₂-,
(b6) -CH₂-Si(Bz)₂-CH₂,
(b7) -CH₂-Si(Et)₂-CH₂- oder
(b8) -CH₂CH₂-P(Ph)-CH₂CH₂-.

6. Phosphinit-Verbindung nach Anspruch 1 oder 2, in der R³ für eine C₁-C₆-Alkoxygruppe steht.

7. Chirale Phosphinit-Verbindung der Formel Iₒbis nach Anspruch 2, worin R¹ für Ph, Ph, substituiert mit 1 bis 3 Alkoxygruppen, worin jede Alkoxygruppe 1 bis 4 Kohlenstoffatome enthält, oder 2-Naphthyl, R² für eine C₁-C₆-Alkylgruppe steht, R³ für eine C₁-C₆-Alkoxygruppe steht, und Z für
-CH₂-Si(Me)₂-CH₂-,
-CH₂-Si(Ph)₂-CH₂-,
-CH₂-Si(Bz)₂-CH₂-
oder
-CH₂-Si(Et)₂-CH₂- steht.

8. Chirale Phosphinit-Verbindung der Formel Iₒbis nach Anspruch 2, dadurch gekennzeichnet, daß sie aus der Gruppe ausgewählt wird, bestehend aus
(R,R)-Bis[(methoxyphenylphosphino)-methyl]-diphenylsilyldiboran,
(R,R)-Bis[(methoxyphenylphosphino)-methyl]-dimethylsilyldiboran und
(R,R)-Bis[(methoxyphenylphosphino)-methyl]-diethylsilyldiboran.

9. Verfahren zur Herstellung einer Phosphinit-Boran-Verbindung der Formel Iₒ oder Iₒbis nach Anspruch 1 oder 2, wobei das Verfahren dadurch gekennzeichnet ist, daß es die Reaktion einer Organometallverbindung, die sich von einem Phosphinit-Boran ableitet, mit einer nicht-organometallischen Phosphinit-Boran-Verbindung umfaßt.

10. Verwendung einer chiralen Phosphinit-Boran-Verbindung der Formel Iₒ' nach Anspruch 2 zur Herstellung eines chiralen Diphosphin-Produktes der Formel 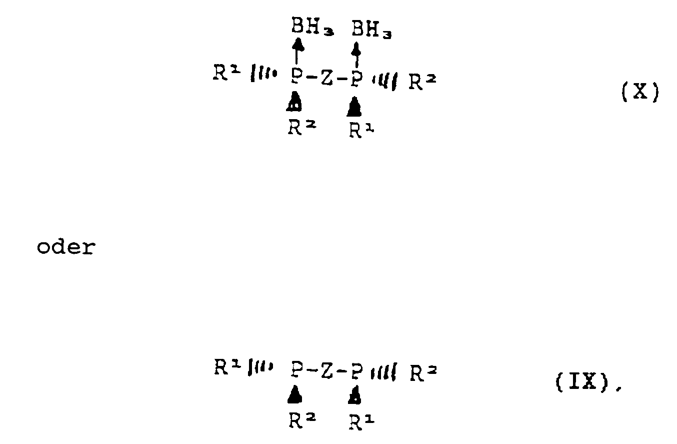 worin R¹, R² und Z die vorstehend gegebenen Definitionen besitzen.

11. Chirale Diphosphin-Diboran-Verbindung, dadurch gekennzeichnet, daß sie der Formel 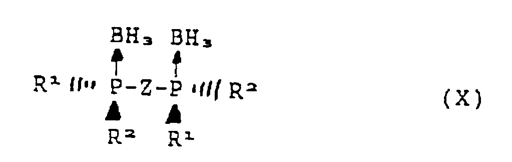 gehorcht, worin R¹ und R² die in Anspruch 1 gegebenen Definitionen besitzen und Z für CH₂-SiR₂-CH₂ steht, worin R für C₁-C₄-Alkyl, C₅-C₆-Cycloalkyl, C₆-C₁₀-Aryl, Benzyl oder Phenethyl steht.

12. Chirale Diphosphin-Diboranverbindung nach Anspruch 11, dadurch gekennzeichnet, daß sie aus der Gruppe ausgewählt wird, bestehend:
(R,R)-Bis[(o-anisylphenylphosphino)-methyl]-diethylsilyldiboran,
(S,S)-Bis[(o-anisylphenylphosphino)-methyl]-diethylsilyldiboran,
(R,R)-Bis[(2,4-dimethoxyphenylphenylphosphino)-methyl]-diphenylsilyldiboran,
(R,R)-Bis[(o-anisylphenylphosphino)-methyl]-diphenylsilyldiboran,
(S,S)-Bis[(o-anisylphenylphosphino)-methyl]-dimethylsilyldiboran und
(S,S)-Bis[(2-naphthylphenylphosphino)-methyl]-diphenylsilyldiboran.
